# EUROPEAN PATENT SPECIFICATION

(11) **EP 0 823 807 B1**
(45) Date of publication and mention of the grant of the patent: **02.04.2003**
(21) Application number: 97202218.0
(22) Date of filing: 16.07.1997
(51) Int. Cl.: H04M 1/57

(54) **Device for converting the format of calling line identification signals**
Vorrichtung zur Formatsumwandlung von Rufleitungs-Identifizierungssignalen
Dispositif de conversion du format de signaux d'identification de ligne appelante

(30) Priority: 09.08.1996 EP 96202245
(43) Date of publication of application: 11.02.1998
(73) Proprietor: Koninklijke KPN N.V., 9726 AE Groningen (NL)
(72) Inventor: Pieterse, Rob, 2264 XZ Leidschendam (NL)
(74) Representative: Wuyts, Koenraad Maria

(56) References cited:
- EP-A- 0 719 016
- WO-A-96/14702
- US-A- 5 022 070
- US-A- 5 351 289

## Description

### BACKGROUND OF THE INVENTION

The present invention relates to a device for converting calling line identification formats. More in particular, the present invention relates to a device for converting call identification data corresponding with a first network specification into call identification data corresponding with a second, different network specification, the data proper in principle remaining unaltered.

Calling line identification (CLI), also known as calling number indication (CNI) or calling line identification and presentation (CLIP), is a service which is now offered by many telephone companies, especially in North America. The service involves the sending, in conjunction with a call alert (ring) signal, of data identifying the calling party. The called party may then, when provided with a suitable telephone set or CLI unit, read the originating number of the incoming call from a display before answering the call, i.e. during call set-up. Some dedicated telephone sets even contain a list of frequently called (or calling) numbers with the corresponding names, thus allowing a name to be shown in the display of the set when a call of a known party comes in.

The introduction of calling line identification (CLI) in various countries by different telecommunications companies involves large costs, as both the telephone switches and the consumer equipment need to be adapted for CLI. This is aggravated by the fact that different telephone administrations have different criteria with respect to CLI, e.g. different data formats and/or different signalling protocols, resulting in different technical specifications of the service. Presently, there are two major signalling techniques for CLI. One is the so-called US or Bellcore standard, used in the United States,
where CLI signals are transmitted as FSK (Frequency Shift Keying) signals between ringing signals. The other is the European or ETSI (European Telecommunications Standardisation Institute) standard,
where CLI signals are transmitted before the first ring as DTMF (Dual Tone Multiple Frequency) signals.

The different standards in turn lead to different equipment for different countries, thus increasing the cost of consumer equipment and consequently disadvantageously influencing the acceptance of the service. International Patent Application WO 96/14702 discloses a system for transmitting CLI information to user terminals (telephone sets). In order to deal with the problem of different terminals being arranged for different standards, it is proposed in said patent application to have in an exchange a subscriber file listing the equipment parameters of each subscriber. In said Prior Art system, each time CLI information is transmitted, the file has to be read. Such a system has the disadvantage that exchanges need to be designed to handle such subscriber files. Also, the files need to be regularly updated for them to be useful. SUMMARY OF THE INVENTION It is an object of the invention to overcome the above-mentioned and other disadvantages of the prior art and to provide a device which allows CLI to be offered by different telephone companies having different technical requirements while employing substantially identical consumer equipment.

It is a further object of the present invention to offer a device for home and office use which is inexpensive and which can be used in combination with existing telephone sets and CLI equipment.

It is another object of the present invention to provide a device which allows use to be made of CLI equipment commercially available in large markets, such as the North American market.

To this end, the present invention provides a device for converting calling line identification messages transmitted over a telecommunications line from a first format into a second format, both formats being telecommunications formats, the device comprising:
- detection means for detecting an incoming call,
- receiving means for receiving a calling line identification message in the first format,
- processing means for processing control data contained in the received calling line identification message while leaving the calling line identification data proper substantially unaltered,
- output means for outputting a calling line identification message containing said calling line identification data and control data in the second format.
The CLI signals are thus subjected to a format conversion, i.e. a conversion of the control part of the CLI message. The actual CLI data, i.e. the data identifying the number of the incoming call, are substantially left unaltered.

It should be noted that US Patent 5 351 289 discloses a device which is capable of converting CLI messages having the US format into parallel digital data for display on a personal computer. However, said Prior Art device does not convert the CLI message into a telecommunications format. On the contrary, said device selectively passes the CLI message in its original format to a telephone set.

In a first embodiment of the present invention, the first format is the ETSI format and the second format is the US format, the receiving means being arranged for receiving DTMF signals and the output means comprising a frequency generator for producing FSK signals.

In a second embodiment of the present invention, the first format is the US format and the second format is the ETSI format, the receiving means being arranged for receiving FSK signals and the output means comprising a DTMF generator for producing DTMF signals.

By means of the device according to the invention, it is possible to convert calling line identification signals from a first format (e.g. the European format) into a second format (e.g. the US format). This enables consumers to purchase CLI equipment designed for the second (e.g. US) format, which equipment may be readily available at low cost. The design and manufacture of dedicated equipment for a relatively small market where the first (e.g. European) format is used thus becomes superfluous.

### BRIEF DESCRIPTION OF THE DRAWINGS

The invention will further be explained with reference to the accompanying drawings, in which:
Fig. 1 schematically shows an embodiment of the device according to the present invention.
Fig. 2 schematically shows an example of formats of calling line identification signals.
Fig. 3 schematically shows a state diagram representing the control of the device of Fig. 1.
Fig. 4 schematically shows an advantageous housing of the device according to the present invention.

### EXEMPLARY EMBODIMENTS

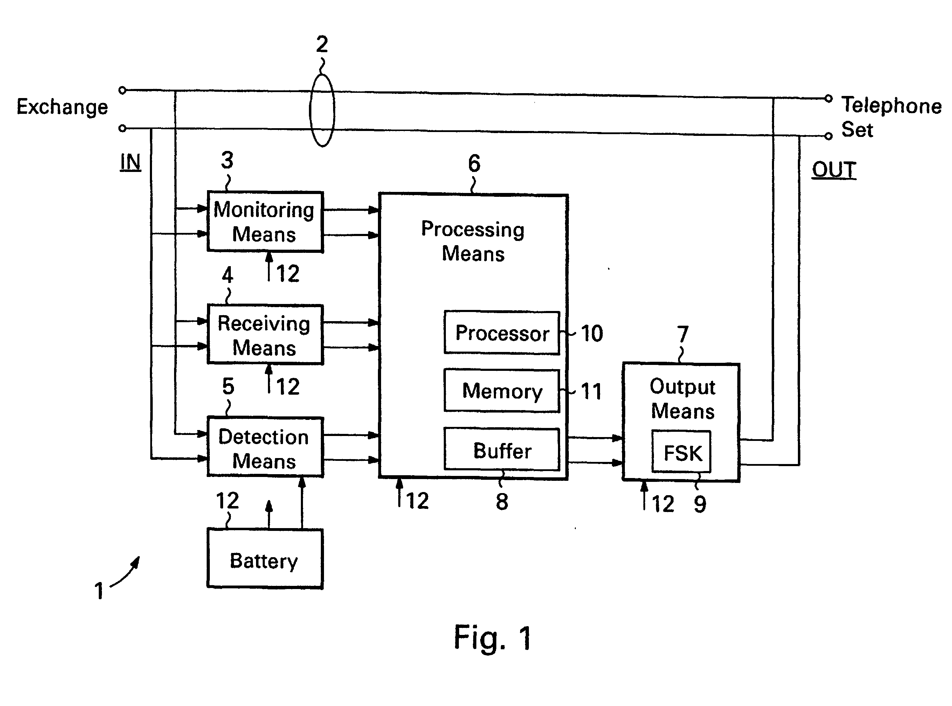

The embodiment of the device shown schematically and by way of example in Fig. 1 comprises monitoring means 3 for monitoring the telecommunications line 2, receiving means 4 for receiving calling line identification data, detection means 5 for detecting an incoming call, processing means 6 for processing the received calling line identification signals (i.e. CLI data and one or more control sequences) and for converting the signals from a first format to a second format, and output means 7 for outputting the converted signals.

The monitoring means 3, the receiving means 4 and the detection means 5 are connected in parallel to both the two-wire line 2 (at "IN") and to the processing means 6. The output means 7 are connected to the processing means 6 and the line 2 (at "OUT").

Between the points indicated by "IN" and "OUT" interruption means (not shown) may be inserted in the line 2 to avoid CLI signals having an incorrect format from being passed to the telephone set. In most cases, however, CLI signals having an incorrect format will not disturb the telephone set (or separate CLI device), so that the line 2 need not be interrupted.

In the preferred embodiment of Fig. 1, the line monitoring means 3 are arranged for monitoring the polarity of the line 2. A change in polarity of the wires of line 2 indicates in some telephone systems an incoming call. That is, the monitoring means 3 are used to detect, in some telecommunications systems, an incoming call before the arrival of ring singals, which in turn are to be detected by the detection means 5. Additionally, the monitoring means 3 may be used to monitor the line 2 during the processing of the CLI message and may e.g. indicate the end of the call.

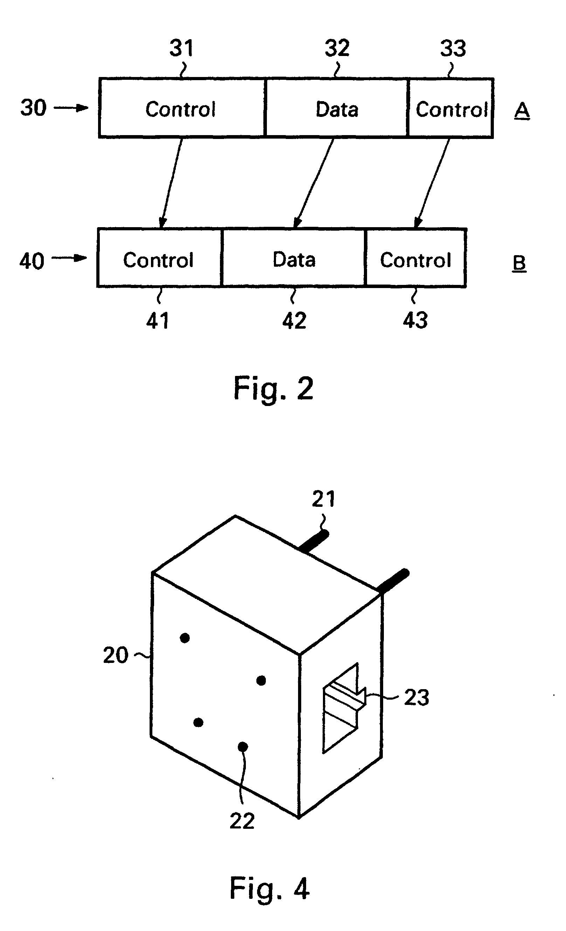

The receiving means 4 are arranged for receiving DTMF signals and for putting these signals into digital form. The detection means 5 are arranged for detecting a ring signal. The processing means 6 may comprise a microprocessor 10 and a memory 11. Alternatively, a so-called finite state machine may be implemented by means of a e.g. PAL (Programmable Logic Array). The processing means 6 may also comprise a buffer 8 for buffering data contained in the CLI message (30 in Fig. 2).

The output means 7 comprise a frequency generator 9 for producing FSK (Frequency Shift Keying) signals in response to data provided by the processing means 6.

The device 1 may comprise a power source 12, such as a (removable) battery, for powering the electronic components. Advantageously, however, the device 1 is powered by the line 2, a capacitor being provided as energy buffer to bridge interruptions in the line voltage. Additionally, the device 1 may comprise other components, such as means for signalling to the exchange. Such additional components are, however, not essential to the present invention and are therefore not illustrated for the sake of clarity.

Advantageously, the electronic components 3, 4, 5, 6, and 7 are integrated in an application-specific integrated circuit (ASIC).

It will be understood that the use of the device according to the present invention is not limited to CLI. A device of this kind may also be used for other telecommunications services, such as "call waiting" where a called party, when engaged in a call, is notified of another incoming call.

A conversion of CLI data from a first format (e.g. the European format) into a second format (e.g. the US format) is schematically shown in Fig. 2. A message 30 of first format A comprises CLI signals. The signals of the message 30 are, in the present example, DTMF signals. The message 30 is constituted by first control signals 31, data signals 32 and second control signals 33. The data signals 32 contain the actual CLI information, i.e. the number of the calling line. The beginning of the data signals 32 may be indicated by a DTMF code "D", while the end of data signals 32 may be indicated by a DTMF code "C". The control signals 31 may begin with a polarity change of the wires of the line (2 in Fig. 1). Similarly, the control signals 33 may also comprise a polarity change to indicate the end of the control sequence. Other control signals may be e.g. ringing signals. Changes in the AC or DC resistance may also be considered to constitute control signals, the actual use and constitution of the control parts 31 and 33 of the message 30 being determined by the signalling protocols employed by the telecommunications company in question.

A message 40 of second format B also comprises CLI signals. The signals of the message 40 are, in the present example, FSK signals. The message 40 is constituted by first control signals 41, data signals 42 and second control signals 43. The data signals 42 contain the actual CLI information, i.e. the number of the calling line. If the second format B is the format employed in the United States, the first control part 41 of the message 40 is constituted by a message header comprising a message type field and a message length field. These fields, as the actual message fields constituting the data part 41, are digitally represented by frequency shift keying, a 1200 Hz signal representing a "mark" (logical 1) and a 2200 Hz signal representing a "space" (logical 0). The message type field and message length fields are preceded by a channel seizure signal (a sequence of logical ones and zeros during 250 ms) and a conditioning signal (a sequence of logical ones during 150 ms). It should be noted that in the US format, the second control part 43 comprises a checksum of one word (8 bits).

The control sequences (control signals 31 and 33) are thus subjected to a protocol conversion, while the data signals 32 merely undergo a change of signal representation. In the example shown, the data signals 32 are DTMF (Dual Tone Multiple Frequency) signals, which are transformed into corresponding FSK (Frequency Shift Keying) signals 42. It will be understood that the contents of the data signals 32, i.e. the number represented by the data signals, are not changed.

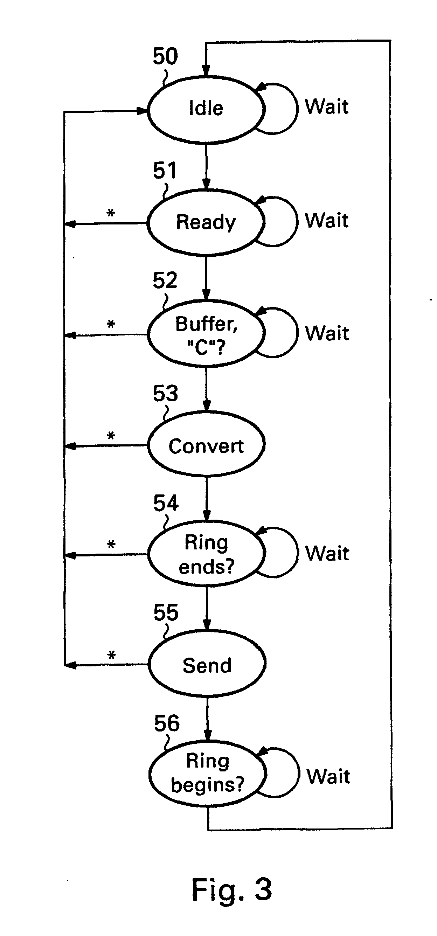

The state diagram shown in Fig. 3 represents the control of the processing unit of the device 1 of Fig. 1, specifically in case CLI signals are converted from the European format to the US format.

Control starts with a idle state 50. In this idle state, it is checked whether the line monitoring means 3 detect a change in the line, e.g. a polarity change, indicating an oncoming call. As long as the line monitoring means detect no change, control remains in idle state 50. When a change (i.c. of polarity) occurs, control assumes a subsequent state, i.e. ready state 51.

In ready state 51, the device is ready to receive calling line identification data, e.g. suitable DTMF signals, in the first format. In the preferred embodiment, the device waits in this state for a DTMF signal "D" to occur. As long as this signal does not occur, control remains in state 51. When a DTMF "D" occurs, control assumes state 52.

In state 52 the CLI data contained in the DTMF (Dual Tone Multiple Frequency) signals are stored in the buffer 8. Control remains in state 52 as long as no DTMF "C" signal occurs. The check for a DTMF "C" signal may be made by the processing means 6 in response to signals produced by the DTMF receiver (receiving means) 4.

In state 53, the contents of the buffer 8 are converted from the first format into the second format and stored again in buffer 8. Also, the converted control sequences 31 and 33 (as shown in Fig. 2) may be stored, as control sequences 41 and 43, in buffer 8.

The subsequent state 54 is a wait state which is maintained as long as the ringing (as detected by detection means 5) does not stop. As soon as the ringing stops, control assumes the next state, i.e. state 55.

In state 55 the control sequence 41 (in Fig. 2), the (converted) contents of buffer 8 (data 42 in Fig. 2), and the control sequence 43 (in Fig. 2) are sent to the line 2. Control subsequently assumes state 56, in which is waited for ringing to commence (as explained with reference to Fig. 2, CLI data are sent to the telephone or CLI set between the first and second ringing signal). Control subsequently returns to idle state 50.

It should be noted that control may return from each state to idle state 50 when a polarity change (in general: a line change as detected by the monitoring means 3) occurs. This return path is indicated in Fig. 3 by an asterisk (*).

Fig. 4 shows an example of a suitable housing of the device 1 of the present invention. Preferably, the device according to the invention is designed so as to fit in a telecommunications wall outlet. The housing 20 comprises pins 21 (plug) for insertion into a (European) wall socket. The housing 20 further comprises a corresponding female connector (socket) 22, as well as a US-style female plug 23 (type RJ12) for connecting a telephone set. All the electronic parts and connections, as shown in Fig. 1, are contained in the housing 20. The particular plug-in housing 20 of Fig. 4 is easy to use and inexpensive.

It will be understood by those skilled in the art that the embodiments described above are given by way of example only and that many modifications and additions are possible without departing from the scope of the present invention.

## Claims

1. Device (1) for converting calling line identification messages transmitted over a telecommunications line (2) from a first format (A) into a second format (B), both formats being telecommunications formats, the device comprising:
- detection means (5) for detecting an incoming call,
- receiving means (4) for receiving a calling line identification message (30) in the first format (A),
- processing means (6) for processing control data (31, 33) contained in the received calling line identification message (30) while leaving the calling line identification data proper (32) substantially unaltered,
- output means (7) for outputting a calling line identification message (40) containing said calling line identification data (42) and control data (41, 43) in the second format (B).

2. Device according to claim 1, wherein the first format is the ETSI format and the second format is the US format, the receiving means (4) being arranged for receiving DTMF signals and the output means (7) comprising a frequency generator (9) for producing FSK signals.

3. Device according to claim 1, wherein the first format is the US format and the second format is the ETSI format, the receiving means (4) being arranged for receiving FSK signals and the output means (7) comprising a DTMF generator for producing DTMF signals.

4. Device according to any of the preceding claims, further comprising monitoring means (3) for monitoring the telecommunications line (2).

5. Device according to claim 4, wherein the monitoring means (3) are arranged for monitoring the polarity of the line (2).

6. Device according to any of the preceding claims, wherein the detection means (5) are arranged for detecting a ring signal.

7. Device according to any of the preceding claims, wherein the processing means (6) comprise a buffer (8) for buffering calling line identification data (32).

8. Device according to any of the preceding claims, wherein the processing means (6) comprise a finite state machine implemented by means of a programmable logic array.

9. Device according to any of the preceding claims, wherein the electronic components (3, 4, 5, 6, 7) are integrated in an application-specific integrated circuit (ASIC).

10. Device according to any of the preceding claims, designed so as to fit in a telecommunications wall outlet, comprising connector pins (21) and at least one female connector (22; 23).

## Patentansprüche

1. Vorrichtung (1) zur Formatsumwandlung von Rufleitungs-Identifikationsnachrichten, die über eine Telekommunikationsverbindung (2) übertragen werden, von einem ersten Format (A) in ein zweites Format (B), wobei beide Formate Telekommunikationsformate sind, wobei die Vorrichtung umfasst:
- Erfassungsmittel (5) zum Erfassen eines ankommenden Anrufs,
- Empfangsmittel (4) zum Empfangen einer Anrufleitungs-Identifikationsnachricht (30) in dem ersten Format (A),
- Verarbeitungsmittel (6) zur Verarbeitung von Steuerdaten (31, 33), die in der empfangenen Anrufleitungs-Identifikationsnachricht (30) enthalten sind, während die Anrufleitungs-Identifikationsdaten (32) selber im wesentlichen unverändert bleiben,
- Ausgabemittel (7) zum Ausgeben einer Anrufleitungs-Identifikationsnachricht (40), die die besagte Anrufleitungs-Identifikationsdaten (42) und Steuerdaten (41, 43) in dem zweiten Format enthält (B).

2. Vorrichtung nach Anspruch 1, **dadurch gekennzeichnet, dass** das erste Format das ETSI-Format ist und dass das zweite Format das US-Format ist, und dass die Empfangsmittel (4) so eingerichtet sind, um DTMF-Signale zu empfangen, und dass die Ausgabemittel (7) einen Frequenzgenerator (9) zur Erzeugung der FSK-Signale umfassen.

3. Vorrichtung nach Anspruch 1, **dadurch gekennzeichnet, dass** das erste Format das US-Format ist und dass das zweite Format das ETSI-Format ist, und dass die Empfangsmittel (4) so angeordnet sind, um die FSK-Signale zu empfangen, und dass die Ausgabemittel (7) so angeordnet sind, um einen DTMF-Erzeuger zur Erzeugung von DTMF-Signalen zu umfassen.

4. Vorrichtung nach einem der vorstehenden Ansprüche, **dadurch gekennzeichnet, dass** weiterhin Überwachungsmittel (3) zum Überwachen der Telekommunikationsleitung (2) vorgesehen sind.

5. Vorrichtung nach Anspruch 4, **dadurch gekennzeichnet, dass** die Überwachungsmittel (3) zum Überwachen der Polarität der Leitung (2) ausgestaltet sind.

6. Vorrichtung nach einem der vorstehenden Ansprüche, **dadurch gekennzeichnet, dass** die Erfassungsmittel (5) so ausgestaltet sind, um ein Lauten-Signal zu erfassen.

7. Vorrichtung nach einem der vorstehenden Ansprüche, **dadurch gekennzeichnet, dass** die Verarbeitungsmittel (6) einen Puffer (8) umfassen, um die Anrufleitungs-Identifikationsdaten (32) zu puffern.

8. Vorrichtung nach einem der vorstehenden Ansprüche, **dadurch gekennzeichnet, dass** die Verarbeitungsmittel (6) eine Finite-Zustände umfassende Maschine umfassen, die durch das Mittel eines Programmierbaren Logikschaltkreises implementiert ist.

9. Vorrichtung nach einem der vorstehenden Ansprüche, **dadurch gekennzeichnet, dass** die elektronischen Komponenten (3, 4, 5, 6, 7) in einem anwendungsspezifischen integrierten Schaltkreis (ASIC) integriert sind.

10. Vorrichtung nach einem der vorstehenden Ansprüche, **dadurch gekennzeichnet, dass** sie in eine Telekommunikations-Wanddose passt, die Verbindungsstecker (21) und mindestens einen weiblichen Verbinder (22; 23) umfasst.

## Revendications

1. Dispositif (1) permettant de convertir des messages d'identification de ligne appelante transmis sur une ligne de télécommunications (2), d'un premier format (A) en un deuxième format, ces formants étant tous deux des formats de télécommunications, le dispositif comprenant :
un moyen de détection (5) servant à détecter un appel entrant,
un moyen de réception (4) servant à recevoir un message (30) d'identification de ligne appelante se présentant dans le premier format (A),
un moyen de traitement (6) servant à traiter des données de commande (31, 33) contenues dans le message (30) d'identification de ligne appelante qui a été reçu tout en laissant les données d'identification de ligne appelante proprement dites (32) sensiblement inaltérées, et
un moyen de sortie (7) servant à délivrer un message (40) d'identification de ligne appelante qui contient lesdites données d'identification de ligne appelante (42) et des données de commande (41, 43) se présentant dans le deuxième format (B).

2. Dispositif selon la revendication 1, où le premier format est le format ETSI et le deuxième format est le format US, le moyen de réception (4) étant conçu pour recevoir des signaux DTMF et le moyen de sortie (7) comprenant un générateur de fréquences (9) servant à produire des signaux FSK.

3. Dispositif selon la revendication 1, où le premier format est le format US et le deuxième format est le format ETSI, le moyen de réception (4) étant conçu pour recevoir des signaux FSK et le moyen de sortie (7) comprenant un générateur DTMF servant à produire des signaux DTMF.

4. Dispositif selon l'une quelconque des revendications précédentes, comprenant en outre un moyen de contrôle (3) servant à contrôler la ligne de télécommunications (2).

5. Dispositif selon la revendication 4, où le moyen de contrôle (3) est destiné à contrôler la polarité de la ligne (2).

6. Dispositif selon l'une quelconque des revendications précédentes, où le moyen de détection (5) est conçu pour détecter un signal de sonnerie.

7. Dispositif selon l'une quelconque des revendications précédentes, où le moyen de traitement (6) comprend un tampon (8) servant à mettre en tampon des données (32) d'identification de ligne appelante.

8. Dispositif selon l'une quelconque des revendications précédentes, où le moyen de traitement (6) comprend une machine à d'états finis mise en oeuvre au moyen d'une matrice logique programmable, dite PLA.

9. Dispositif selon l'une quelconque des revendications précédentes, où les composants électroniques (3, 4, 5, 6, 7) sont intégrés en un circuit intégré propre à une application, dit ASIC.

10. Dispositif selon l'une quelconque des revendications précédentes, conçu pour être ajusté dans une prise murale de télécommunications, comprenant des broches connectrices (21) et au moins un connecteur femelle (22 ; 23).
